Europäisches Patentamt

European Patent Office

Office européen des brevets

(19)

(11) Veröffentlichungsnummer : **0 113 384 B1**

# (12) EUROPÄISCHE PATENTSCHRIFT

(45) Veröffentlichungstag der Patentschrift :
07.08.85

(21) Anmeldenummer : 83100132.6

(22) Anmeldetag : 10.01.83

(51) Int. Cl.⁴ : **A 23 K   1/02, A 23 K   1/14**

(54) Silagefuttermittel aus Rübennassschnitzeln mit angereichertem Proteingehalt als Ergänzungs- und Einzel-Futtermittel für Wiederkäuer.

(43) Veröffentlichungstag der Anmeldung :
18.07.84 Patentblatt 84/29

(45) Bekanntmachung des Hinweises auf die Patenterteilung : 07.08.85 Patentblatt 85/32

(84) Benannte Vertragsstaaten :
AT BE CH DE FR GB IT LI LU NL SE

(56) Entgegenhaltungen :
DE-A- 1 900 242
DE-B- 1 229 826
DE-B- 2 731 285
DE-C-   866 448
FR-A- 2 380 740
GB-A- 1 315 174

(73) Patentinhaber : SECOPAL
35bis rue des Canus BP. 31
F-78600 Maisons-Laffitte (FR)

Epandage-Vinasse-Ausbringungs-GmbH
Viktoriastrasse 8
D-6800 Mannheim 1 (DE)

(72) Erfinder : Deleplanque, Gerard
22, Avenue de Saint-Germain
F-78600 Maisons-Laffitte (FR)
Erfinder : Maindron, Gabriel
6, Allee des Merles Cedex 254 Plessis la Foret
F-77176 Savigny le Temple (FR)
Erfinder : Lewicki, Wilhelm
Viktoriastrasse 8
D-6800 Mannheim 1 (DE)

(74) Vertreter : Jahn-Held, Wilhelm W. Dr.Dr.-Ing.
Dipl.-Chem.
Schöne Aussicht '8
D-3513 Staufenberg-Landwehrhagen (DE)

**Beschreibung**

Nach dem Statistical Yearbook der United Nations 1968, Kali-Briefe 16, Dezember 5, demonstriert die Extrapolation der Kurve der Zunahme der Weltbevölkerung einen Anstieg auf etwa 6,6 Milliarden Menschen bis zum Jahr 2000.

Die Ernährung dieser Menschen setzt die Erzeugung von Massenerträgen der Kulturpflanzen, auch als Futterquelle für die Tierernährung, zur Verringerung oder Schliessung der Proteinlücke, voraus. In der Produktion der Agrarwirtschaft ist die Erzeugung der Zuckerindustrie von erheblicher Bedeutung.

Nach E. Thier, Zeitschrift Zuckerindustrie, 1981, 60, wurden 1980 19 Mio t Zuckerrüben verarbeitet. Diese ergaben an Nebenerzeugnissen einen Anfall von 9,5 Mio t Naßschnitzel mit etwa 10 Gew.% Trockensubstanz (TS). Daraus können erzeugt werden :

4,75 Mio t Preßschnitzel bei 20 % TS
3,80 Mio t Preßschnitzel bei 25 % TS
1,06 Mio t Trockenschnitzel bei 90 % TS.

Bei der Produktion von Preßschnitzeln fallen also die etwa 3,6-fache Menge an Produktionsvolumen gegenüber der Herstellung an Trockenschnitzeln an.

In der Landwirtschaft haben diese Futtermittel aus der Eigenerzeugung an Rüben für die Ernährung der Tiere, wie Milch-, Mast-, Jung-Vieh, Schweine, Schafe, als Ergänzung des wirtschaftseigenen Futters, wie Grün- und Rauhfutter, Körner- und Wurzelfrüchte, Bedeutung als Nebenprodukte der Zuckerindustrie.

Diese in der Zuckerindustrie gefertigten Futtermittel dienen also zur Ergänzung, insbesondere der Trockenfuttermittel, und erhalten Zusatzstoffe zur Verwendung als Mischfuttermittel.

Nach Th. Cronewitz, Zeitschrift Zuckerindustrie, 1980, 129-130, ergeben 100 kg Zuckerrüben durch Extraktion 75 kg Rohsaft, und es resultieren Naßschnitzel mit 6 kg Trockensubstanz und 69 kg Wasser. Aus diesen werden durch Verpressen Preßschnitzel mit 6 kg Trockensubstanz und 20 kg Wasser erzeugt. Aus diesen können durch Trocknung Trockenschnitzel mit 6 kg Trockensubstanz und 1 kg Wasser erzeugt werden.

Futtermittel enthalten etwa 10 bis 15 % Wasser ; N-haltige Stoffe wie Rohprotein, Eiweiss, Amide ; N-freie Stoffe wie Öle, Fette ; Rohfasern, wie Cellulose und mineralische Stoffe. Von besonderer Bedeutung als Futtermittel sind die Nebenprodukte der Getreide- und Ölerzeugung, wie aus Sojabohnen, sowie der Zuckerindustrie. Diese Futtermittel erhalten zur Ergänzung nichteiweiss-haltige N-Verbindungen als « Amide » und mineralische Zusatzstoffe.

Preßschnitzel der Zuckerproduktion, beispielsweise aus Doppelspindelpressen, können Gehalte an Trockensubstanz von 18 % bis 27 % aufweisen. Der Mindestgehalt soll 18 Gew.-% betragen. Der Gehalt an Rohprotein, Rohfett, Rohfasern, mineralischen Stoffen als Asche beträgt etwa 3,8 %.

Nach der Futterwert-Tabelle, DLG, Band 17 (1952) enthalten :

| Produkte | TS Gew.-% | organ. Substanz | Roh-Eiweiß | Roh-Fett | Roh-Faser | N-freie Stoffe |
|---|---|---|---|---|---|---|
| Naßschnitzel frisch | 9,0 | 8,5 | 0,8 | 0,1 | 1,9 | 5,7 |
| abgepresst | 15,0 | 14,3 | 1,3 | 0,1 | 3,0 | 9,9 |
| Preß-schnitzel frisch | 39,3 | 37,3 | 3,9 | 1,0 | 9,7 | 22,7 |
| Trocken-schnitzel | 90,3 | 85,1 | 8,5 | 0,7 | 16,9 | 59,0 |

In einer Diffusionsbatterie im Gegenstrom entwässerte Naßschnitzel können nach der Verpressung auf einer Parabolspindel-Presse bei einer Pressdauer von 60 min folgende Gehalte an Trockensubstanz (TS) aufweisen :

2

| Pressdruck kg/cm | TS der Preßschnitzel % |
|---|---|
| 1 | 12 |
| 3 | 18 |
| 5 | 22 |
| 10 | 24 |
| 20 | 25 |

Bei der Zuckerfabrikation fällt etwa 4 % des Rübengewichtes als sirupöse Flüssigkeit an mit etwa 50 % Zuckergehalt als Saccharose sowie mit etwa 20 % organischen Stoffen und 10 % Mineralstoffen und 20 % Wasser.

(Die Prozentangaben beziehen sich stets auf Gewichtsprozente).

Aus dieser Melasse entstehen durch fermentative Prozesse, wie in Brennereien Rübenschlempen mit beispielsweise 5 bis 10 % Trockensubstanz ; 2-4 % Roheiweiss ; 0,75 % Rohfaser ; 0,05 % Fette ; 3-5 % N-freie organische Stoffe ; 0,35 % Mineralstoffe in Form von Asche. Aus diesen Schlempen können Melassedickschlempen mit folgenden Gehalten hergestellt werden :

Trockensubstanz 70,9 bis 72,2 %,
Roheiweiss 17,5 bis 24,7 %,
N-freie Extraktstoffe 31,2 bis 38,8 %,
Mineralstoffe als Asche 22,2 bis 31,3 %.

Diese Werte sind beispielsweise von Olbrich ermittelt ; Handbuch der Futtermittel, 3-Band, Verlag Paul Parey, Hamburg, Berlin, Nebenprodukte der Alkoholgewinnung, Seite 88, 1967.

Eine neuere Analyse ergibt folgende Gehalte :

| | | |
|---|---|---|
| Trockensubstanz | 63 | Gew.-% |
| Organische Masse | 50 | Gew.-% |
| N-haltige Masse | 23 | Gew.-% |
| N-freie Masse (Extraktionsstoffe) | 26 | Gew.-% |
| Kalium | 6 | Gew.-% |
| Natrium | 2 | Gew.-% |
| Calcium | 0,5 | Gew.-% |
| pH-Wert | 6,0 | Gew.-% |
| Spezifisches Gewicht/20 °C | 1,3 | Gew.-% |

Andere Typen von durch Fermentation oder durch physikalisch-chemische Behandlung ganz oder teilweise entzuckerte Melassen, die durch stufenweise Eindickung auf etwa 50 bis 80 Gew.-% Trockenmasse konzentriert sind weisen folgende Zusammensetzung auf, auf 100 Gew.-% Trockenmasse gerechnet :

| Stoffe | Typ LPCV | Typ MPCV | Typ HPCV |
|---|---|---|---|
| Organische Masse | 60-70 | 65-80 | 65-85 |
| anorganische Stoffe | 25-30 | 35-15 | 35-15 |
| Gesamtstickstoff (Kjeldahl) | 1,5-3,5 | 3,6-7 | 7.1-12,5 |
| davon $NH_4$-N | – | – | 3,5-4,5 |
| N-freie organische Verbindungen | 41-50 | 40-50 | 30-40 |
| Reduz.Zucker (Glucose) | 10-18 | 4,5-10 | 4,5-11 |
| anorganische Masse als K-,Na-,Ca-,Mg-, P-Ionen | 30-40 | 15-35 | 15-35 |

3

(Fortsetzung)

| Stoffe | Typ LPCV | Typ MPCV | Typ HPCV |
|---|---|---|---|
| $K_2O$-Gehalt (der anorganischen Masse) | 7,5-9 | 7-13,5 | 1,5-5 |
| $P_2O_5$ | 0,25-0,35 | 0,20-0,75 | 0,15-0,30 |

(LPCV = Low Protein Containing Vinasses)
(MPCV = Middle Protein Containing Vinasses)
(HPCV = High Protein Containing Vinasses)

Die deutsche Patentschrift 668 311 macht ein Verfahren zur Herstellung hochwertiger Futtermittel bekannt. Dieses besteht aus dem Saturationsschlamm, aus Melasse, Diffusionsschnitzel, gegebenenfalls mit Zusatz von Kleie, Kleeheumehl, Fleischfuttermehl, Getreideschrot, Ölkuchenmehl.

Dieses Futtermittel ist hoch angereichert an $CaCO_3$, und es wird keine Melasseschlempe als Komponente verwendet.

Die deutsche Patentschrift 866 448 betrifft ein Verfahren zur Gewinnung eines Futtermittels aus Abfällen der Zuckerbereitung. Es soll nach diesem Stand der Technik frisch gefällter Karbonatschlamm mit etwa 85 % $CaCO_3$ mit Rübenschnitzeln oder mit Melasse gemischt und getrocknet werden. Dieses Futtermittel zeigt keine Weiterentwicklung des Standes der Technik.

Die deutsche Patentschrift 2 000 791 beschreibt melassierte Futtermittel. Dieses mineralische Futtermittel enthält Phosphate von Na, Ca, Mg, die mit einem Zusatz von 5 bis 15 % Melasse melassiert sind und zusätzlich einen Gehalt an CaO oder $Ca(OH)_2$ aufweisen. Diese Mischung soll auch bei tiefen Temperaturen nicht erhärten. Auch dieser Stand der Technik verwendet keine entzuckerte Melasseschlempe als Komponente.

Die deutsche Patentschrift 2 011 257 beschreibt ein Verfahren zur Herstellung von Futtermitteln aus Zuckerrüben und/oder Zuckerrohrmelasse. Die Herstellung erfolgt durch Verdünnung der Melasse mit Zusatz von $Ca(OH)_2$, wobei diese Masse mit Gasen verschäumt und danach im Sprühverfahren getrocknet wird.

Diese Druckschrift zitiert H. Olbrich, Die Melasse (1956), 34, der auf die Ergänzung der Melasse mit Ca und P hinweist. Als Trägersubstanz für die Melasse werden Trockenschnitzel verwendet, an welche Melasse angetrocknet wird.

Der Fortschritt liegt also darin, dass dieser Stand der Technik anstelle von Oxyd oder Hydroxyd Ca in Form von Phosphat einsetzt.

Der Fortschritt soll auch in der Verschäumung und Sprühtrocknung zu einem lockeren, frei fliessenden Pulver liegen. Dieses Pulver soll eine gute Verteilung bei der Vermischung mit anderen Futtermittel möglich machen.

Auch diese Entwicklung geht einen anderen Weg und führt nicht zu dem Futtermittel gemäss der Erfindung.

Die deutsche Offenlegungsschrift 2 142 425 beschreibt ein Verfahren zur Herstellung einer rieselfähigen Trockenmelasse, die als Futter mittel verwendet wird.

Nach diesem Verfahren wird Melasse auf 50 °C erwärmt und dann ein Oxyd der Erdalkaligruppe zugesetzt, mit Luft aufgeschäumt und die Mischung der Kontakt-, Konvektions-, Vakuum-, Strahlungs-Trocknung unterworfen. Der Gehalt an Ca soll 0,5 bis 10 % betragen.

Auch dieses Verfahren entspricht dem bisherigen Stand der Technik zur Verwertung von Melasse mit 10-20 % Wasser und in der Trockensubstanz mit 60 % Zucker in Form von Saccharose und Invertzucker und 40 % Nichtzucker. Das Futtermittel gemäss der Erfindung enthält keine Melasse als Hauptbestandteil, sondern daraus erzeugte Melasseschlempe als ausgewählte Komponente besonderer Zusammensetzung.

Die deutsche Offenlegungsschrift 28 54 793 betrifft die Verbesserung von Tierfutter durch Umwandeln der Kohlehydrate von Feldfrüchten in Eiweiss. Es sollen Feldfrüchten Düngemittel wie $Na_2HPO_4$ und $NH_4$-Acetat als Nährstoffe für Mikroorganismen zugesetzt werden. Nach Zusatz von Proteinhefekultur und durch Belüftung soll die Bildung mikrobieller Eiweisssubstanz erfolgen. Diese Anreicherung von Protein durch Biosynthese geht einen anderen Weg und nicht den der Verwendung eines Proteinreichen Nebenproduktes der Gärungsindustrie.

Die deutsche Offenlegungsschrift 29 13 806 betrifft ein Verfahren zur Herstellung eines Blockfuttermittels auf Melassebasis.

Das Futtermittel dieses Standes der Technik enthält 18-65 % Melasse ; 4-9 % $NH_4HPO_4$ ; 0-3 % $NH_4$-Polyphosphat ; 0-5 % $Na_4$-Pyrophosphat ; 0,5-5,0 % Attapulgitton ; 5-20 % Wasser ; 3-15 % MgO ; 8 % $FeSO_4$.

Es sollen die Stoffe unter hochtouriger Scherwirkung bis zur Dispergierung des Tones gemischt werden, danach das MgO und $FeSO_4$ zugegeben werden.

Den gleichen Vorschlag entspricht die deutsche Offenlegungsschrift 29 13 776. Dieser Stand der

4

Technik beschreibt also die Herstellung eines Futtermittels als Beifutter mit dem Hauptbestandteil Melasse und geht damit einen anderen Weg als das Futtermittel gemäss der Erfindung.

Die amerikanische Patentschrift 4 027 043 beschreibt ein Mischfuttermittel aus einer Lösung von Phosphaten oder Phosphorsäure in einer Menge von 0,5 % bis 5 % als $P_2O_5$ und aus Salzen oder Oxyden von Al, Mg, Ca in einer Menge von 0,5 % bis 5 %, um einen festen Block zu bilden. Die übrigen Komponenten bestehen aus tierischem Fett, Stärke, Harnstoff, $NH_4$-Phosphaten, sowie aus einem Emulgator.

Die Hauptkomponente besteht aus 45 % bis 93 % Melasse.

Dieses Futtermittel verwendet nur Protein-freie Stoffe als N-Komponente.

Die amerikanische Patentschrift 4 171 385 beschreibt ein Futtermittel mit einem Gehalt an Melasse von 18 % bis 74 %, sowie mit $NH_4$-Polyphosphat und $Na_4$-Pyrophosphat, mit 0,5 % bis 5 % emulgierbarem Ton, mit 5 % bis 30 % Wasser und mit 5 % bis 30 % tierischem Fett und mit MgO zur Erzeugung eines festen Blockes. Dieses Futtermittel enthält ausserdem gemahlenes Sojabohnenmehl als Protein-Komponente.

Auch dieser Stand der Technik geht einen anderen Weg als das Futtermittel gemäss der Erfindung.

Die amerikanische Patentschrift 4 265 916 beschreibt ein Futtermittel mit dem gleichen Stand der Technik.

Dieses Futtermittel hat beispielsweise folgende Zusammensetzung :

| Organische Naturprodukte als | |
| --- | --- |
| Cottonsed Meal | 23,8 Gew.-% |
| Wheat Midds | 10 Gew.-% |
| Melasse | 12 Gew.-% |
| Corn | 12,5 Gew.-% |
| Dehydrated Alfalfa | 10 Gew.-% |
| | |
| Mineralstoffe als | |
| NaCl | 13,5 Gew.-% |
| $CaCO_3$ | 5 Gew.-% |
| $Ca_2HPO_4$ | 6 Gew.-% |
| $K_2SO_4 \cdot MgSO_4$ | 2 Gew.-% |
| MgO | 0,9 Gew.-% |
| Harnstoff | 4 Gew.-% |

Auch dieses Futtermittel wird mit einem Zusatz von etwa 5 % Attapulgite als Ton-Komponente plastfiziert.

Dieser jüngere Stand der Technik zeigt also, dass sich dieser in einer anderen Richtung entwickelt hat. Dieser betrifft nicht die Komponenten des Futtermittels gemäss der Erfindung, und es findet keine Anreicherung an Protein aus einem Nebenprodukt der Fermentation oder der physikalisch-chemischen Zuckergewinnung statt. Es wird auch nicht die Mengenbegrenzung der Komponente gelehrt, welche zur Anreicherung des Proteingehaltes eingesetzt wird und nicht die Auswahl der Zusammensetzung dieser Komponente.

Aufgabe der Erfindung ist ein Silage-Futtermittel aus Rübennaßschnitzeln mit angereichertem Proteingehalt als Ergänzungs- und Einzel-Futtermittel für Wiederkäuer.

Die folgende Tabelle demonstriert den technischen Effekt zur Lösung dieser Aufgabe.

| | Preßschnitzel | konzentrierte Melasseschlempe | Futtermittel der Erfindung |
| --- | --- | --- | --- |
| Trockensubstanz | 20 | 66-71 | 20-21,6 |
| N-Verbindung | | | |
| N-löslich | 2,1 | 27,2 | 2,4-2,9 |
| Cellulose | 4,4 | 0 | 3,8-4,0 |
| Minerale | 1,0 | 19,3 | 2,3-1,4 |
| pH-Wert | 5,7 | 6,75 | 5,17 |

Diese Werte zeigen die Anreicherung des Proteingehaltes von 2,1 % auf 2,4 bis 2,9 Gew.-%, also eine Steigerung um etwa 40 % auf den Ausgangswert als N gerechnet.

Das Futtermittel gemäss der Erfindung stellt eine Auswahl in der Kombination der Komponenten und der Menge dar. Gerade die Typen-Auswahl zeigt sehr unterschiedliche Gehalte des Gesamt-N, mit denen eine Anreicherung des N-Gehaltes im Futtermittel erreicht werden kann.

Gegen den Einsatz dieses Nebenproduktes der Melasse-Verarbeitung bestand ein erhebliches Vorurteil der Fachwelt. Dieses findet darin seine Begründung, dass diese Komponente (B) des Futtermittels der Erfindung einen hohen Gehalt an K-Ionen aufweist. Dieser liegt beispielsweise zwischen 1,5 und 13,5 Gew.-%. Dieser hohe Gehalt an K-Ionen kann zu einer Störung des physiologischen Gleichgewichtes führen.

Die Fachwelt hat nicht erkannt, dass eine Auswahl der Melassedickschlempe derart möglich ist, dass Typen mit extrem niedrigem Gehalt an K-Ionen eingesetzt werden können. Diese hat weiter nicht erkannt, dass gerade diese Typen einen besonders hohen Gehalt an Gesamt-Stickstoff aufweisen und zur Anreicherung an Proteinen führen. Zur Lösung der Aufgabe der Erfindung gehört die Auswahl der Komponente (B) auch deshalb, weil diese zu einer Erniedrigung des Zuckergehaltes der Komponente (A) führt.

Das Futtermittel gemäss der Erfindung ist aber auch für die Verwendung der Typen mit höheren K-Gehalten geeignet. Dieser Effekt der Erfindung findet seine Begründung darin, dass die Menge der Komponente (B) in der Mischung beider Komponenten (A + B) limitiert ist. Erst nachdem diese Erkenntnise vorlagen als erfinderische Idee ist die neue Lehre möglich geworden, des Einsatzes ausgewählter Typen der entzuckerten, konzentrierten Melasseschlempe (B) in einer Menge von 2,0 bis 5,0 Gew.-%.

Das Futtermittel gemäss der Erfindung ist im Patentanspruch 1 definiert. Zur Lösung der Aufgabe der Erfindung werden abgepresste Rückstände der Gewinnung von Zuckerrüben-Rohsaft in Form von Preßschnitzeln (A) mit 18 % bis 30 Gew.-% Trockensubstanz mit einem Zusatz von etwa 2 bis 5 Gew.-%, und bei geringem K-Gehalt von 1 bis 3 % $K_2O$ mit einem Zusatz von bis 12 Gew.-%, der Komponente (B) in Form von ganz oder teilweise entzuckerter, eingedickter Zuckerrüben-Melasse mit einem Gehalt von 40 % bis 75 Gew.-% Trockensubstanz und/oder Rohrzucker-Melasse, auf die Preßschnitzel als solche gerech zu einem praktisch homogenen Gemisch zudosiert. Die Unteransprüche offenbaren die alternative Ausgestaltung des Silagefuttermittels nach Anspruch 1. Diese betreffen bestimmte, definierte Zusammensetzung der Komponenten (A) und (B) in Kombination mit definierten pH-Werten.

Diese betreffen auch die bevorzugte Zusammensetzung des Silagefuttermittels der Erfindung in der Kombination mit definiertem pH-Wert als technischer Effekt. Eine alternative, bevorzugte Ausgestaltung wird auch mit tierverwertbaren Zusätzen in Form anorganischer Stoffe als Verbindungen oder feinteilige Minerale formuliert. Das Futtermittel der Erfindung wird vorzugsweise dem jeweils in der Praxis verfügbarem Futtermittel, das lokal verfügbar ist, zudosiert oder als Austauschfuttermittel unter dessen Verminderung zugesetzt. Das Silagefuttermittel der Erfindung ist insbesondere durch die Anreicherung auf einen Proteingehalt von etwa 11 bis 35 Gew.-% gekennzeichnet.

Das Silagefuttermittel der Erfindung ist vorzugsweise durch die Absenkung eines definierten pH-Wertes gekennzeichnet, der den Silageeffekt beschleunigt und dadurch die Verdaulichkeit durch Verbesserung der Laktatfermentation fördert.

Das Futtermittel gemäss der Erfindung ist vorzugsweise durch die Auswahl der entzuckerten, konzentrierten Melasseschlempe als Komponente (B) mit einem abgestuften, niedrigen K-Gehalt, insbesondere von 1,0 % bis 5 Gew.-% bei gleichzeitig hohem Gehalt an Gesamt-N, insbesondere von 7,0 % bis 13,0 Gew.%, auf Trockensubstanz gerechnet, gekennzeichnet.

Dem Futtermittel gemäss der Erfindung werden auch organische Zusatzstoffe, wie Melasse, Melasseschnitzel mit definierten Gehalten an Wasser zudosiert.

Das Futtermittel für Wiederkäuer gemäss der Erfindung ist weiter dadurch gekennzeichnet, dass dieses in seiner Tagesration auf das Verhältnis Komponente (B) : Gesamtfuttermittel wie etwa 1 : 10 in Gew.-% eingestellt wird.

Das Futtermittel gemäss der Erfindung wird vorzugsweise zur Einsparung hochwertiger Rohprotein-haltiger Futtermittel, wie Sojabohnen-, Sonnenbluemen-Schrot, eingesetzt.

In einer bevorzugten Ausführungsform wird das Futtermittel der Erfindung in seinem Mengenverhältnis zum Gesamtfutter, als Tagesration gerechnet, nach dem errechneten Bedarf der Wiederkäuer an Rohprotein eingestellt.

Das Silagefuttermittel der Erfindung als Ergänzungs- und Einzel-Futtermittel ist in dem Einsatz der Komponente (B) nicht auf ganz oder teilweise entzuckerten, eingedickten Zuckerrüben- und/oder Rohrzuckermelasse beschränkt.

Es können alternativ auch als Komponente (B) die Nebenprodukte der fermentativen Vergärung von Zuckerrüben- und/oder Rohrzucker-Melasse zu Alkohol, Hefen, Ephedrin, Glutamaten, Lysin, wie auch zu organischen Säuren, insbesondere zu Gluconsäure, Zitronensäure, Milchsäure, aber auch die Nebenprodukte aus der mikrobiellen Gewinnung von Antibiotica, Enzymen, Aminosäuren, Vitaminen eingesetzt werden.

Es kann alternativ als Komponente (B) auch das aus diesen alternativen Nebenprodukten teilentkalisierte bzw. teilensalinierte Produkt eingesetzt werden. Diese Behandlung kann durch physikalisch-chemi-

6

sche Verfahren, oder gegebenenfalls auch durch Entzuckerung der Melasse durch Saccharat-, oder Baryth- Fällung, wie auch durch Ionenaustausch, oder durch chromatographische Trennung erfolgen. Es ist auch möglich, andere technische Verfahren für die Gewinnung der Komponente (B) einzusetzen. Das Futtermittel gemäss der Erfindung ist für den Einsatz der Komponente (B) in seiner Auswahl der Herstellungsverfahren nicht beschränkt.

Die Erfindung betrifft auch ein Verfahren zur Herstellung des Futtermittels gemäss der Erfindung. Dieses ist dadurch gekennzeichnet, dass die Behandlung der Preßschnitzel unmittelbar nach dem Austritt aus der Pressvorrichtung im noch heissen Zustand, insbesondere mit 40° bis 50 °C erfolgt. Es wird zuerst eine definierte, vorzugsweise bis zur halben Menge der entzuckerten, konzentrierten Melasseschlempe als Komponente (B) in dünner Schicht auf die Preßschnitzel aufgesprüht. Durch diesen technischen Effekt des Verfahrens der Erfindung wird erreicht, dass eine Teilmenge der Komponente (B) in die noch offenen Poren als Kapillaren der Preßschnitzel eindringt und fixiert wird. Erst danach wird die weitere, grössere bis halbe Menge der Komponente (B) in einem transportierenden Zwangsmischer zudosiert, homogenisiert und auf den Preßschnitzeln als Pellets oder als Granulate oder Inkrusate angetrocknet. Das Verfahren der Erfindung ist weiter dadurch gekennzeichnet, dass die Preßschnitzel als Komponente (A) eine bestimmte, definierte Dicke und Breite aufweisen.

Das Verfahren der Erfindung ist alternativ dadurch gekennzeichnet, dass die Zugabe der warmen Zusatzstoffe oder solcher mit Raumtemperatur zu den Preßschnitzeln in einer Mischvorrichtung und erst danach die Behandlung mit der entzuckerten, konzentrierten Melasseschlempe als Komponente (B) erfolgt. In einer bevorzugten Ausführungsform des Verfahrens der Erfindung erfolgt die Zugabe der Zusatzstoffe in dem transportierenden Zwangsmischer an einer oder mehreren Stellen auf dem Transportweg. Durch die Zumischung der Komponente (B) in dem Futtermittel der Erfindung wird eine konservierende Eigenschaft erreicht bzw. eine solche verstärkt. Die Absenkung des pH-Wertes fördert die Fermentation zu Lactaten. Sofern jedoch empfindliche, organische Wirkstoffe, wie Vitamine, zudosiert werden sollen, ist es vorteilhaft, wenn die Zugabe erst kurz vor der Fütterung erfolgt. Der saure Charakter der Komponente (B) in dem Futtermittel der Erfindung verhindert in der Praxis eine parasitäre Nebengärung und es wird im Pansen der Wiederkäuer eine stimmulierende Wirkung ausgeübt.

Das Silagefuttermittel der Erfindung weist somit einen besonders vorteilhaften tierbiologischen Effekt auf.

Die Verdaulichkeit in % von Diffusionsschnitzeln beträgt nach der Futterwert-Tabelle (l. c.) :

|  | Eiweiss | N-freie Stoffe |
|---|---|---|
| Naßschnitzel frisch | 67 | 85 |
| Naßschnitzel abgepresst | 61 | 85 |
| Preßschnitzel frisch | 61 | 83 |
| Trockenschnitzel | 54 | 85 |

Der Futterwertest nach der Hohenheimer-Methode (HFT) mit der Eichung auf 24 h Inkubationszeit ergibt folgende Werte für die Komponente (B) gemäss der Zusammensetzung.

| | |
|---|---|
| Trockensubstanz (TS) | 66,28 Gew.-% |
| Gasbildung (ml/24 h) | 29,7 |
| Rohprotein (i.TS) | 34,70 % |
| Rohfett (i.TS) | 0,32 % |
| Umsetzbare Energie TS | 8,2 MJ/kg TS |
| Umsetzbare Energie Lufttrockene Substanz | 5,6 MJ/kg LS |
| Nettoenergie-Laktation | 4,72 MJ/kg TS |
| Nettoenergie-Laktation Lufttrockene Substanz | 3,22 MJ/kg |
| Verdaulichkeit der organischen Substanz in vitro | 67,2 % |

Dieser Versuch demonstriert die Verdaulichkeit in der gleichen Grössenordnung, wie für Diffusionsschnitzel nach den Tabellenwerten.

Es is damit die Eignung der entzuckerten, konzentrierten Melasseschlempe als Komponente (B) des Futtermittels der Erfindung nachgewiesen.

7

Nach W. Poersch, Zeitschrift Zuckerindustrie, (1982), 195 erfordert die Verdunstung von 1 kg Wasser aus Naßschnitzel von 42 °C mit auf 111 °C erhitztem Wasserdampf 2 537,8 kJ/kg Wasser.

Dieser beträchtliche Energieaufwand wird durch das Futtermittel der Erfindung mit den Komponenten (A) und (B) vermieden. Es entfällt das Trocknen der Preßschnitzel mit 75 % bis 80 Gew.-% Wasser auf Trockenschnitzel. Das Futtermittel der Erfindung bedeutet somit eine erhebliche Energieeinsparung.

Es wurden 1980 in der Bundesrepublik Deutschland 105.640 t Trockenschnitzel und 79.140 t Naßschnitzel mit einem Naßschnitzelwert von insgesamt 255.567 t hergestellt. Schon die Erzeugung einer Teilmenge des Futtermittels der Erfindung führt also zu einer beträchtlichen Energieeinsparung.

Für das Futtermittel der Erfindung ergibt sich daraus auch der Vorteil der Erhöhung des Gehaltes an Trockensubstanz.

Das Futtermittel der Erfindung bietet den volkswirtschaftlichen Vorteil, dass ganz oder teilweise entzuckerte, eingedickte Rüben- und/oder Rohrzuckermelasse als wertvolle Komponente im Futtermittel als Ergänzungs- oder Einzelfutter verwendet wird.

Ein wesentlicher Vorteil liegt auch in der Erweiterung des Einsatzes der Komponente (B) auf Nebenprodukte der fermentstiven Vergärung von Zucker- und/oder Rohrzucker-Melasse zu Alkohol oder zu organischen Säuren, sowie auf solche Nebenprodukte, die aus der mikrobiellen Synthese gewonnen werden. Dabei ist auch der Restzuckergehalt der Komponente (B) wertvoll als C- und Energie-Quelle für Mikroorganismen bei der Erzeugung von Biomasse und Metaboliten.

Das Futtermittel der Erfindung bietet den volkswirtschaftlichen Vorteil, der Einsparung an Trocknungsenergie und, dass durch den Einsatz der Komponente (B) eine Anreicherung an Rohprotein erreicht wird. Es kann somit eine äquivalente Menge anderer, hochwertiger Proteinträger, wie Sojabohnenschrott substituiert werden.

Dabei ist es vorteilhaft, dass auch eine Variation in der Auswahl der Typen der Komponente (B) mit niedrigem, abgestuften K-Gehalt und mit hohem Proteingehalt möglich ist. Bei geringem $K_2O$-Gehalt ist es möglich, auch den Zusatz der Komponente (B) auf bis 10 %, vorzugsweise auf 6,5 Gew.-% zu erhöhen. Der Vorteil liegt auch darin, dass die Komponente (B) aus der wirtschaftseigenen Erzeugung der Zuckerrüben oder Zuckerrohres stammt und somit in den Kreislauf der Ernahrung zurückgeführt wird.

Es kann also durch die Verwendung des Futtermittels der Erfindung eine Teilmenge von im allgemeinen bis etwa 15 %, vorzugsweise von 10 Gew.-%, der Tagesration der Fütterung der Wiederkäuer ersetzt werden.

Ein biologisch günstiger Effekt des Futtermittels der Erfindung liegt in der Absenkung des pH-Wertes, der die konservierende Wirkung fördert. Das Futtermittel der Erfindung fördert auch die Lactat-Fermentation, wobei auch die Lactat-Fermentation, wobei auch der Restzuckergehalt als Energie- und C-Quelle für den mikrobiellen Prozess vorteilhaft ist.

Das Futtermittel gemäss der Erfindung kann also in der Verwertung eines Nebenproduktes der Landwirtschaft und der Zuckerindustrie und des Gärungsgewerbes, sowie durch den Einsatz als Substituent für Teilmengen hochwertiger Proteinträger als wertvoller Beitrag für die Tierernährung und damit auch für die menschliche Ernährung bezeichnet werden.

Die Eignung des Futtermittels der Erfindung zeigt der folgende Fütterungsversuch.

Fütterung von Lämmern der Rasse Lacaune während der Wachstumsperiode von 21 Tagen bis zur Schlachtung nach 68 Tagen.

Es wurde das Futtermittel der Erfindung als Ergänzungsfutter mit 4 % der Komponente (B) und mit 4 % Melasse als Zusatzstoff eingesetzt.

Der Versuch bestätigt die Gleichwertigkeit des Nährwertes des Futtermittels der Erfindung mit üblichem Mastfutter und Melasse.

| Anzahl der Lämmer | 23 | 23 |
|---|---|---|
| Anfangsgewicht kg | 17,4 | 17,4 |
| G.M.Q. Summe g +) | 338 | 322 |
| Verbrauch Summe g | 1236 | 1235 |
| kg MS/kg Gewinn | 3,65 | 3,83 |
| Schlachtgewicht kg | 38,6 | 38,2 |

Es wurde konzentriertes Futter mit Beigabe Stroh und vergleichsweise mit 8 % Melasse verwendet.
+) G.M.Q. = Gewichtszunahme

Der folgende Versuch zu Rindvieh mit 7 Tieren bestätigt die Gleichwertigkeit des Futtermittels der Erfindung im Vergleich zur Verfütterung der Komponente (A) als Ergänzungsfutter zu üblichem Kraftfutter.

| Komponente | Futtermittel |
|---|---|
| A | der Erfindung +) |

| | A | der Erfindung +) |
|---|---|---|
| Versuchsdauer Tage | 84 | 84 |
| Anfangsgewicht kg | 533 | 527 |
| Endgewicht kg | 680 | 682 |
| Gewichtszunahme kg/Tag | | |
| 0 - 35 Tage | 1,98 | 2,10 |
| 35 –84 Tage | 1,57 | 1,70 · |
| 0 –84 Tage | 1,74 | 1,85 |

+) Futtermittel der Erfindung mit 6,5 % Komponente (B) auf die Komponente (A) mit niedrigem $K_2O$-Gehalt von 0,5 %.

**Patentansprüche**

1. Silagefuttermittel aus Rübennassschnitzeln mit angereichertem Proteingehalt als Ergänzungs- und Einzel-Futtermittel für Wiederkäuer bestehend aus abgepressten Rückständen der Gewinnung von Zuckerrüben- Rohsaft in Form von Preßschnitzeln (A) mit einem Gehalt an Trockensubstanz (TS) von 18 % bis 30 Gew.-% und aus einem Zusatz von etwa 2 % bis 5 Gew.-% ganz oder teilweise entzuckerter, eingedickter Zuckerrüben- und/oder Rohrzucker- Melasse (B) mit einem Gehalt von 40 % bis 75 Gew.-% Trockensubstanz (TS), auf die Preßschnitzel als solche gerechnet.

2. Futtermittel nach Anspruch 1, dadurch gekennzeichnet, dass die Komponente (A) etwa 20 Gew.-% TS ; etwa 1,5 bis 3 Gew.-% verwertbare organische N-Verbindungen ; etwa 3,8 % bis 4,8 Gew.-% N-freie organische Verbindungen in Form von Cellulose-Derivaten, bezogen auf 100 % Trockensubstanz, und Mineralstoffe enthält und einen pH-Wert von etwa 4,5 bis 6,5 aufweist.

3. Futtermittel nach den Ansprüchen 1 oder 2, dadurch gekennzeichnet, dass die Komponente (B) etwa 40 % bis 75 Gew.-% TS aufweist und, auf 100 % Trockenmasse bezogen, etwa 27 Gew.-% verwertbare organische N-Verbindungen und Mineralstoffe enthält und einen pH-Wert von etwa 4,5 bis 9 aufweist.

4. Futtermittel nach den Ansprüchen 1 bis 3, dadurch gekennzeichnet, dass dieses 20 % bis 22 Gew.-% TS ; 2,4 bis 3,0 Gew.-% organische N-Verbindungen ; 3,8 bis 4,0 Gew.-% N-freie, organische Verbindungen, bezogen auf 100 % Trockensubstanz, und Mineralstoffe enthält und einen pH-Wert von etwa 5,2 aufweist.

5. Futtermittel nach den Ansprüchen 1 bis 4, dadurch gekennzeichnet, dass als tierverwertbare Zusatzstoffe N-, P-, Ca-, Mg-, Na-Verbindungen oder diese Elemente enthaltende Stoffe für sich oder als Gemisch in einer Gesamtmenge von 5 % bis 20 Gew.-%, auf das Futtermittel gerechnet, und gegebenenfalls als Zusatzstoffe Spurenelemente in Form von Fe-, Cu-, Mn-, Co-Verbindungen oder feinteilige Minerale in Mengen von 0,1 bis 0,5 Gew.-% zudosiert werden.

6. Futtermitel nach den Ansprüchen 1 bis 5, dadurch gekennzeichnet, dass dieses in einer Menge von 5 % bis 15 Gew.-%, vorzugsweise in einer Menge von 10 Gew.-%, dem jeweils verfügbaren Futtermittel zudosiert oder als Austauschfutter eingesetzt wird, auf die Gesamtmenge des Futtermittels gerechnet.

7. Futtermittel nach den Ansprüchen 1 bis 6, dadurch gekennzeichnet, dass dieses durch Vermischen der Komponente (A), vorzugsweise mit einem Gehalt an Rohprotein von 8 % bis 9 % in der Trockensubstanz, durch Vermischung mit der Komponente (B) im Proteingehalt auf etwa 11 % bis 35 Gew.-% Rohprotein, auf Trockensubstanz gerechnet, angereichert wird.

8. Futtermittel nach den Ansprüchen 1 bis 7, dadurch gekennzeichnet, dass als entzuckerte, konzentrierte Melasseschlempe (B) solche Typen eingesetzt werden, die einen abgestuften, niedrigen K-Gehalt in Verbindung mit einem hohen Gehalt an Gesamt-N, davon je etwa die halbe Menge organisches N als Rohprotein aus der Zuckerrübe und als $NH_4$-N aufweist.

9. Futtermittel nach den Ansprüchen 1 bis 8, dadurch gekennzeichnet, dass dieses einen $K_2O$-Gehalt von etwa 1 % bis 5 Gew.-% und einen Gesamt-N-Gehalt von etwa 7 % bis 13 Gew.-% aufweist, auf Trockensubstanz gerechnet, davon je etwa die halbe Menge als organische N-Verbindungen und als $MH_4$-N-Verbindungen.

10. Futtermittel nach den Ansprüchen 1 bis 9, dadurch gekennzeichnet, dass dieses als organischen Zusatzstoff in einer Gesamtmenge von 5 % bis etwa 20 Gew.-%, auf das Futtermittel gerechnet, Melasse oder Melasseschnitzel mit 8,5 % bis 18,5 % zudosiert enthält.

9

11. Futtermittel nach den Ansprüchen 1 bis 10, dadurch gekennzeichnet, dass als Komponente (B) Nebenprodukte der fermentativen Vergärung von Zuckerrüben- und/oder Rohrzucker-Melasse zu Alkohol, Hefen, Ephedrin, Glutamaten, Lysin, zu organischen Säuren, insbesondere zu Gluconsäure, Zitronensäure, Milchsäure, zu aus der mikrobiellen Gewinnung von Antibiotica, Enzymen, Aminosäuren, Vitaminen anfallenden Nebenprodukten, und gegebenenfalls diese Stoffe nach Teilentkalisierung bzw. Teilentsalinierung durch physikalisch-chemische Verfahren, oder gegebenenfalls nach Entzuckerung der Melasse durch Saccharat-, Baryth-Fällung, durch Ionenaustausch oder chromatographische Trennung, verwendet werden.

12. Verfahren zur Herstellung des Ergänzungs- und Einzel- Futtermittels nach den Ansprüchen 1 bis 11, dadurch gekennzeichnet, dass durch Zudosierung und Mischung der Komponente (A) mit der Komponente (B) eine Absenkung des pH-Wertes der Komponente (A) um etwa 10 % bis 15 % in dem Gemisch durch den Silageeffekt beschleunigt wird.

13. Verfahren nach Anspruch 12, dadurch gekennzeichnet, dass bei geringem K-Gehalt der Komponente (B) zwischen 1 bis 3 % $K_2O$ der Zusatz zur Komponente (A) bis auf 12 Gew.-%, vorzugsweise bis auf 6,5 Gew.-%, erhöht wird.

14. Verfahren zur Herstellung des Ergänzungs- und Einzel-Futtermittels nach den Ansprüchen 1 bis 13, dadurch gekennzeichnet, dass die Behandlung der Komponente (A) mit der Komponente (B) derart erfolgt, dass auf die noch heissen Preßschnitzel unmittelbar nach dem Pressvorgang, eine kleinere Menge der Dickschlempe (B) in dünner Schicht auf die Preßschnitzel (A) aufgedüst wird und dadurch in die noch offenen Poren der Preßschnitzel eindringt, und danach eine grössere, gegebenenfalls auch die gleiche Menge, der Dickschlempe (B) in einem transportierenden Zwangsmischer zudosiert, vorzugsweise aufgesprüht, homogenisiert und auf den Preßschnitzeln angetrocknet wird.

15. Verfahren nach Anspruch 14, dadurch gekennzeichnet, dass die Komponente (A) und gegebenenfalls weitere Stoffe in eine Mischvorrichtung eingeführt und vermischt werden und danach die Komponente (B) kontinuierlich oder in Chargen der Komponente (A) und gegebenenfalls dem Stoffgemisch zudosiert wird, insbesondere durch Einsprühen.

16. Verwendung des Ergänzungs- und Einzel-Futtermittels nach den Ansprüchen 1 bis 11, dadurch gekennzeichnet, dass dieses in seiner Menge zum Gesamtfuttermittel der Verfütterung an Wiederkäuer in seiner Tagesration auf das Verhältnis Komponente (B) : Gesamtfuttermittel wie etwa 1 : 10 in Gew.-% eingestellt wird.

17. Verwendung nach Anspruch 16, dadurch gekennzeichnet, dass das Futtermittel zur Einsparung hochwertiger Rohprotein- haltiger Futtermittel, wie Sojabohnen-, Sonnenblumen- Schrot, eingesetzt wird.

18. Verwendung nach den Ansprüchen 16 oder 17, dadurch gekennzeichnet, dass das Futtermittel in seinem Mengenverhältnis zum Gesamtfutter, als Tagesration gerechnet, nach dem Bedarf der Wiederkäuer an Rohprotein eingestellt wird.

## Claims

1. Silage foodstuffs of fresh sugar-beet pulps enriched in proteins, used as supplements and single or complete feed for ruminants, comprising compressed residues from the extraction of raw sugar-beet juice in the form of a compressed pulp (A) of dry matter (TS) content 18 % to 30 % by weight and an addition of about 2 % to 5 % by weight of molasses from sugar-beet and/or cane-sugar (B), concentrated and entirely or partly freed of its sugar, of dry matter (TS) content 40 % to 75 % by weight calculated with respect to the compressed pulp as such.

2. Foodstuff according to Claim 1, characterized in that constituent (A) comprises approximately 20 % of TS by weight ; approximately 1.5 % to 3 % by weight of usable organic N combinations ; approximately 3.8 % to 4.8 % by weight of organic bonds devoid of N in the form of cellulose derivatives, related to 100 % of the dry matter as well as of the mineral materials, and is of pH 4.5 to 6.5.

3. Foodstuff according to either of Claims 1 or 2, characterized in that constituent (B) comprises approximately 40 % to 75 % of TS by weight and comprises, with respect to 100 % of the dry mass, approximately 27 % by weight of organic N bonds and usable mineral materials, and is of pH 4.5 to 9.

4. Foodstuff according to any one of claims 1 to 3, characterized in that it comprises 20 % to 22 % of dry matter by weight ; 2.4 % to 3.0 % by weight of organic N bonds ; 3.8 % to 4.0 % by weight of organic bonds devoid of N, related to 10u % of dry matter and mineral materials, and is of pH approximately 5.2.

5. Foodstuff according to any one of Claims 1 to 4, characterized in that it comprises, as additives usable by the animals, N, P, Ca, Mg, Na bonds or substances, simple or mixed, containing these elements, in a total quantity of 5 % to 20 % by weight referred to the foodstuff, and possibly comprising trace elements as additives in the form of Fe, Cu, Mn, Co bonds or minerals in fine particles in quantities of 0.1 % to 0.5 % by weight.

6. Foodstuff according to any one of Claims 1 to 5, characterized in that it is added to the foodstuff available at any given moment, in a quantity of 5 % to 15 % by weight, and preferably in a quantity of 10 % by weight, with respect to the total quantity of foodstuff, or is used as a replacement foodstuff.

7. Foodstuff according to any one of Claims 1 to 6, characterized in that its protein content is

**0 113 384**

enriched to approximately 11 % to 35 % by weight of crude proteins with respect to the dry matter by the admixture of constituent (A), preferably with a crude protein content of 8 % to 9 % of dry matter, and by the admixture of constituent (B).

8. Foodstuff according to any one of Claims 1 to 7, characterized in that one uses distiller's residues freed of their sugar and concentrated (B) of types with a graduated and low K content combined with an elevated N content, about half of the quantity of organic N being each time in the form of crude protein derived from sugar-beet, the other half being in the form $NH_4$—N.

9. Foodstuff according to any one of Claims 1 to 8, characterized in that it comprises a $K_2O$ content of approximately 1 % to 5 % by weight and a total N content of approximately 7 % to 13 % by weight, both contents with respect to dry matter, approximately half of the quantity of N being in the form of organic bonds and the other half in the form of $NH_4$—N bonds.

10. Foodstuff according to any one of Claims 1 to 9, characterized in that it comprises as organic additive a total quantity of 5 % to approximately 20 % by weight with respect to the foodstuff, with the addition of 8.5 % to 18.5 % of molasses or molasses pulp.

11. Foodstuff according to any one of Claims 1 to 10, characterized in that one uses as constituent (B) by-products of the processing by fermentation of sugar-beet or cane-sugar molasses into alcohol, yeasts, ephedrine, glutamates, lysine, organic acids, in particular gluconic acid, citric acid, lactic acid, into by-products occurring in the microbial manufacture of antibiotics, enzymes, amino acids and vitamins, the said substances possibly being used after partial removal of potassium or sodium by physicochemical processes, or possibly after desaccharization of the molasses by precipitation of the saccharides and of baryta, by ion-exchange or by chromatographic separation.

12. Process for the manufacture of supplementary feeds and complete feeds according to any one of Claims 1 to 11, characterized in that by addition and mixing of constituent (A) with constituent (B), the lowering of the pH of constituent (A) is accelerated by approximately 10 % to 15 % in the mixture by the effect of ensilage.

13. Process according to Claim 12, characterized in that for a low K content of constituent (B), between 1 % and 3 % $K_2O$, the addition to constituent (A) is increased to 12 % by weight, and preferably to 6.5 % by weight.

14. Process for the manufacture of supplementary feeds and complete feeds according to any one of Claims 1 to 13, characterized in that the treatment of constituent (A) with constituent (B) is done in such a way that using a nozzle directed onto the still very hot compressed pulp as soon as possible after pressing a rather small quantity of thick distiller's residues (B) is applied in a thin layer on the compressed pulp (A) and penetrates into the open pores of the compressed pulp cakes, and that subsequently a greater quantity, or even the same quantity, of thick distiller's residues (B) is added to a forced feed mixer, preferably by pulverization, and is homogenized and begins to dry on the compressed pulp cakes.

15. Process according to Claim 14, characterized in that constituent (A), and possibly other substances, is conveyed to a mixing device to be mixed and that subsequently constituent (B) is added continuously, or in successive loads, and is eventually added to the mixture of products, in particular by pulverization.

16. The use of the supplementary feed and the complete feed according to any one of Claims 1 to 11, characterized in that these feeds are quantitatively adjusted with respect to the overall feeding of the ruminants for the daily intake, with a constituent (B)-foodstuff ratio according to the present invention : total feeding of about 1 % to 10 % by weight.

17. Use according to Claim 16, characterized in that the foodstuff according to the invention is employed with a view to economizing on costly high-protein content feeds, such as soybean seeds or sunflower seeds.

18. Use according to either of Claims 16 or 17, characterized in that the foodstuff according to the invention can be adjusted quantitatively with respect to the overall feeding, calculated as daily intake, according to the requirements of the ruminants for crude proteins.

**Revendications**

1. Fourrage ensilé de pulpes fraîches de betteraves avec une teneur en protéine enrichie comme fourrage complémentaire et individuel pour les ruminants, composé de résidus évacués et pressés de la production du jus de betteraves vierge sous forme de pulpes surpressées (A) avec une teneur en matière sèche (MS) de 18 à 30 % du poids et d'un additif d'environ 2 à 5 % du poids de mélasse de betteraves et/ou de mélasse de canne, complètement ou partiellement désucrée, avec une teneur de 40 à 75 % du poids de matière sèche (MS), calculé comme tel sur la pulpe surpressée.

2. Fourrage d'après paragraphe 1 caractérisé par le fait que le composant (A) comporte environ 20 % du poids en MS, environ 1,5 à 3 % du poids en liaisons organiques azotées utilisables, environ 3,8 à 4,8 % du poids en liaisons organiques exemptes d'azote sous forme de dérivés cellulosiques en se rapportant à 100 % de matière sèche. Il contient des minéraux et une valeur pH d'environ 4,5 à 6,5.

3. Fourrage d'après les paragraphes 1 ou 2, caractérisé par le fait que le composant (B) présente environ 40 à 70 % de matière sèche et contient, appliqué à 100 % de matière sèche, environ 27 % du poids en liaisons organiques azotées utilisables et de substances minérales et présente une valeur pH d'environ 4,5 à 9.

4. Fourrage d'après les paragraphes 1 à 3, caractérisé par le fait que celui-ci, appliqué à 100 % de matière sèche, contient 20 à 22 % du poids en MS, 2,4 à 3 % du poids en liaisons organiques exemptes d'azote et de substances minérales et présente une valeur pH d'environ 5,2.

5. Fourrage d'après les paragraphes 1 à 4, caractérisé par le fait que des liaisons de N, P, Ca, Mg ou Na peuvent être utilisées comme produit d'addition pour animaux ou des matières contenant ces éléments calculés sur le fourrage à part ou comme mélange dans une quantité globale (totale) de 5 à 20 % du poids et qui sont ajoutées le cas échéant comme produits d'addition d'oligo-éléments sous forme de liaisons Fe, Cu, Mn ou Co, ou des minéraux (à particules fines) en quantité de 0,1 à 0,5 % du poids.

6. Fourrage d'après les paragraphes 1 à 5, caractérisé par le fait que celui-ci est ajouté dans une proportion de 5 à 15 % du poids, de préférence dans une proportion de 10 % du poids, calculée sur la quantité globale du fourrage, au fourrage respectivement disponible ou est utilisé comme fourrage d'échange.

7. Fourrage d'après les paragraphes 1 à 6, caractérisé par le fait que celui-ci est enrichi par le mélange du composant (A) de préférence avec une teneur protidique brute de 8 à 9 % de la substance sèche, en le mélangeant au composant (B) teneur en protéine d'environ 11 à 35 % du poids de protéine brute, calculé sur la matière sèche.

8. Fourrage d'après les paragraphes 1 à 7, caractérisé par le fait que l'on utilise en tant que composant (B) de la vinasse de mélasse désucrée et concentrée présentant une teneur basse en K en liaison avec une teneur élevée en azote total, dont environ la moitié présentée en azote organique comme protéine brute de la betterave à sucre et comme $NH_4$—N.

9. Fourrage d'après les paragraphes 1 à 8, caractérisé par le fait que celui-ci présente une teneur en $K_2O$ d'environ 1 à 5 % du poids et une teneur d'azote total d'environ 7 à 13 % du poids, calculé sur la matière sèche, dont la moitié environ comme liaison organique d'azote et comme liaison $NH_4$—N.

10. Fourrage d'après les paragraphes 1 à 9, caractérisé par le fait que celui-ci contient, calculé sur le fourrage, ajouté comme produit organique d'addition sous une proportion totale de 5 à environ 20 % du poids, de la mélasse ou des cossettes de mélasse entre 8,5 et 18,5 %.

11. Fourrage d'après les paragraphes 1 à 10, caractérisé par le fait que l'on utilise comme composant (B) des sous-produits de la fermentation de la mélasse de betteraves sucrières et/ou de la mélasse de canne en alcool, en levure, en éphédrine, en glutamate, en lysine, en acide gluconique, en acide citrique, acide lactique, en sous-produits se présentant à partir de la production microbienne d'antibiotiques, d'enzymes, d'acides aminés, de vitamines et, le cas échéant, enlèvement partiel du potassium ou bien dessalement partiel par procédés physico-chimiques, ou, après désucrage de la mélasse par précipitation de saccharate ou précipité de baryte, par échange d'ions ou séparation chromatographique.

12. Procédé pour la production du fourrage complémentaire et du fourrage individuel, d'après les paragraphes 1 à 11, caractérisé par le fait qu'en augmentant le dosage et en mélangeant le composant (A) avec le composant (B), la diminution de la valeur pH du composant (A) est accélérée d'environ 10 à 15 % dans ce mélange par l'effet de l'ensilage.

13. Procédé, d'après le paragraphe 12, caractérisé par le fait qu'avec une teneur K réduite du composant (B) entre 1 à 3 % de $K_2O$ l'addition au composant (A) est augmentée jusqu'à 12 % du poids, de préférence jusqu'à 6,5 % du poids.

14. Procédé pour la production du fourrage complémentaire et du fourrage individuel, d'après les paragraphes 1 à 13, caractérisé par le fait que le traitement du composant (A) avec le composant (B) s'effectue à tel point que l'on injecte sur les pulpes surpressées encore chaudes, immédiatement après le processus de surpressage, une petite quantité de la vinasse concentrée (B) en couche fine sur les pulpes surpressées (A) et qui s'infiltre ainsi dans celle-ci, et à quoi l'on rajoute une quantité plus élevée ou, le cas échéant, la même quantité de vinasse concentrée (B) dans un mélangeur de préférence pulvérisée, homogénéisée et qui est appliquée sur les pulpes surpressées.

15. Procédé d'après le paragraphe 14, caractérisé par le fait que le composant (A) et, le cas échéant, d'autres substances sont introduites et mélangées dans un appareil de mélange et où est ajouté après le composant (B), en continu avec le composant (A), le cas échéant au mélange des substances, particulièrement par pulvérisation.

16. Utilisation du fourrage complémentaire et du fourrage individuel, d'après les paragraphes 1 à 11, caractérisé par le fait que celui-ci est accordé dans sa quantité, au fourrage total pour affouragement des ruminants, concernant la ration journalière, en proportion avec le composant (B) du fourrage obtenu.

17. Utilisation d'après le paragraphe 16, caractérisé par le fait que le fourrage obtenu est mis en place pour réaliser une économie sur des fourrages contenant des protéines brutes riches comme le tourteau de soja et de tournesol.

18. Utilisation d'après les paragraphes 16 ou 17, caractérisé par le fait que le fourrage inventé dans sa constitution quantitative par rapport à la ration de base journalière est en accord avec les besoins en protéines brutes des ruminants.